Europäisches Patentamt

European Patent Office

Office européen des brevets

(11) Publication number: **0 434 877 A1**

# EUROPEAN PATENT APPLICATION

(21) Application number: 89313710.9

(22) Date of filing: 29.12.89

(51) Int. Cl.5: **G06F 15/30**

(43) Date of publication of application:
**03.07.91 Bulletin 91/27**

(84) Designated Contracting States:
**CH DE FR GB LI**

(71) Applicant: **PAXLEA LIMITED**
**26 Fitzwilliam Place**
**Dublin 2(IE)**

(72) Inventor: **Holland, Eugene**
**17 Hermitage Grove Grange Road**
**Rathfarnham Dublin 16(IE)**

(74) Representative: **Prutton, Roger et al**
**MARKS & CLERK Alpha Tower Suffolk Street**
**Queensway**
**Birmingham B1 1TT(GB)**

(54) A computer system for portfolio management investment functions.

(57) A computer system is disclosed for carrying out portfolio management investment functions. A number of operations computers are connected via a communications network to user systems and use a star network to fixed disk drive and tape drives. A development computer controls functions of the operations computers and user accesses, via the communications network. Complete versatility is thus achieved for portfolio management investment functions, batch processing and word processing. The operations computers are connected directly to switched or leased lines for reception and processing of parameter values. Any missing values are estimated, and calculated fund values are transmitted directly to the user systems on a regular basis.

Fig.1

EP 0 434 877 A1

# A COMPUTER SYSTEM FOR PORTFOLIO MANAGEMENT INVESTMENT FUNCTIONS

The present invention relates to a computer system for performing real-time transaction processing for portfolio management investment functions in an environment where associated functions such as word processing and batch processing are required, in addition to other applications functions.

Heretofore, because of the difficulties in controlling user accesses and in handling functions from time to time requiring large processing power requirements, a hierarchial computer system is used, such as that described in European Patent Specification No. 0082225 B1. In such systems, however, computer or memory faults may be extremely disruptive and accessing information may be difficult. Such problems are unacceptable in a portfolio management investment system where it is essential that users have access at all times to available information.

A further problem with known computer systems for performing portfolio management investment functions is the regular updating of databases with values for portfolio parameters such as equity values, and making such information available to users very soon after it has been received.

The present invention is directed towards providing a computer system for handling portfolio management investment functions and other associated functions such as word processing and batch processing functions which provides for quick user access to stored information, for continuity of operation in the event of faulty operation of hardware and for regular, uninterrupted updating of databases

According to the invention, there is provided a computer system comprising an operations computer arranged to perform portfolio management investment functions, the operations computer being connected via a communications network to user interface devices, characterised in that:,
the computer system includes at least two operations computers;
the operations computers are connected by a cluster controller to a cluster of fixed disk drives and back-up tape drives;
the system further comprises at least one control and development computer connected to the operations computers via the communications network for controlling access of enquiries and inputs for portfolio management investment functions from the user interface devices to a selected operations computer, for programming and updating stored processing values for portfolio investment operations of the selected operations computer, and for directing use of the or each other operations computer for word processing or batch processing functions;
the system includes modulation and demodulation devices operating on telecommunication lines and connected directly to the selected operations computer for reception of real-time information including current values of portfolio investment parameters, the modulation and demodulation devices being arranged to receive said information automatically and to verify that the information is in a pre-defined format; and
the selected operations computer comprises:-
an input interface circuit for receiving and storing in random access memory said information;
a comparator circuit for verifying if values for all of a pre-defined list of parameters have been received;
a processing circuit having means for estimating values of parameters for which values have not been received based on a stored next previous value for that parameter and on current market indicators, and for storing estimated values in random access memory, the processing circuit also comprising means for calculating fund prices based on the parameter values stored in random access memory; and
an output interface circuit for generating a report for said fund prices and for automatically transmitting said report to the user interface devices via the communications network.

In one embodiment, the cluster controller comprises a star network.

Ideally, the processing circuit comprises means for estimating parameter values of Government Stocks based on a determination of the relevant coupon rate, number of days since the previous dividend issued and of the capital element.

The invention will be more clearly understood from the following description of a preferred embodiment thereof, given by way of example only with reference to the accompanying drawings, in which;

Fig. 1 is a block diagram of a computer system of the invention;

Fig. 2 is a block diagram of portion of the system; and

Fig. 3 is a flow diagram illustrating operation of the system.

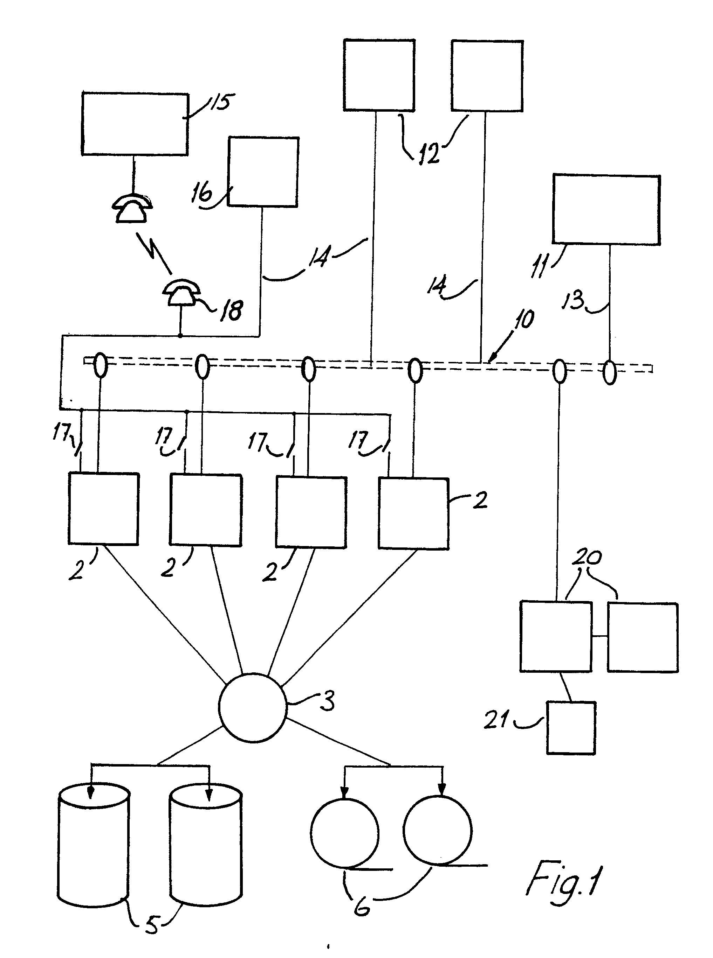

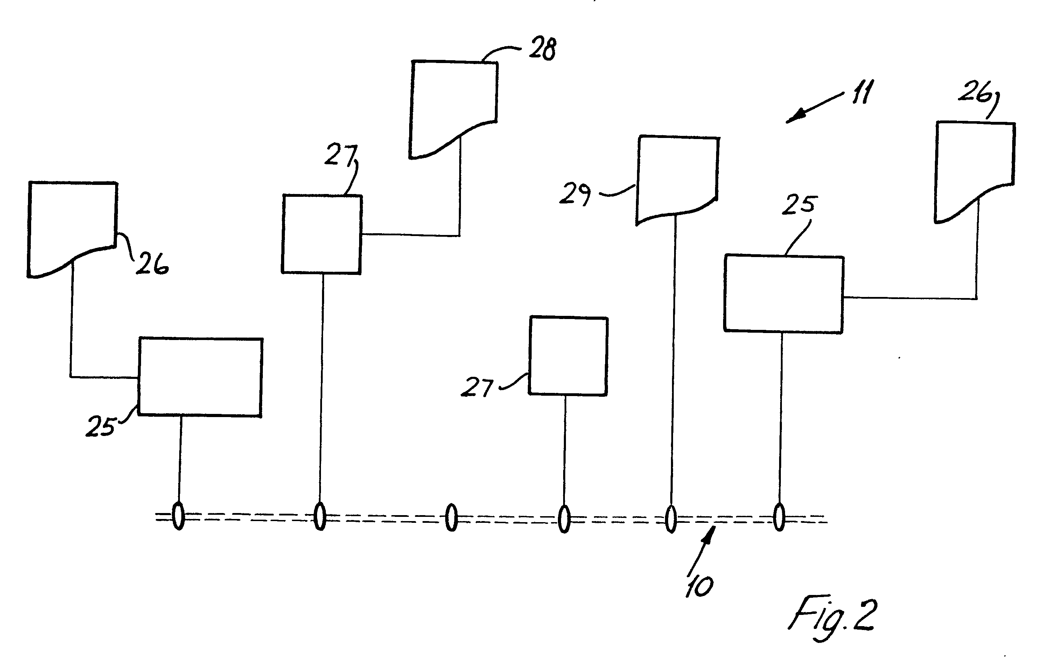

Referring to the drawings and initially to Figs 1 and 2, there is illustrated a computer system for portfolio management investment functions according to the invention indicated generally by the reference numeral 1. The computer system 1 comprises four operations computers 2 interconnected by a cluster controller, namely a star network 3 having four nodes. Two of the computers 2 are of 64 Mbytes memory capacity and four m.i.p.s. (million instructions per second) processing capacity, the other two being of 32 Mbyte memory capacity and 1.6 m.i.p.s. processing capacity. The operations computers 2 are connected by the star network 3 to two fixed disk drives 5 and to two back-up tape drives 6, having a combined memory capacity of 5 Gbytes.

The operations computers 2 are connected by a communications network 10 to user interface devices in an in-house user system 11, and in remote user systems 12. Direct cable connections 13 are used for the in-house user system 11 and leased lines 14 are used for the remote user systems 12. The operations computers 2 are arranged to be also connected directly, by-passing the network 10 to remote information sources 15 via switched lines and to remote information sources 16 via leased lines 14. The optional connections are illustrated by switches 17. Modems 18 (only one of which is illustrated) are used for the switched and leased lines.

In addition to the operations computers 2, the data processing system 1 also includes development computers 20 having memory disks 21, for carrying out development work including coding of programs, controlling access to the operations computers 2 and developing and enhancing the structure of databases of the operations computers 2. Such work is carried out via the network 10.

Referring now to Fig. 2, the in-house user system 11 is illustrated in more detail. The user system 11 comprises a number of micro-computers 25 having associated printers 26, and a number of terminals 27, some of which have associated printers 28. There are also printers 29 connected directly to the network 10.

In operation, two of the operations computers 2 perform on-line applications processing functions, a third is used for batch processing of reports and a fourth carries out word processing functions. Any of the operations computers 2 may access the fixed disk drives 5 and tape drives 6 for access to stored data. Each operations computer 2 has access via the star network 3 to the other operations computers 2 to allow transfer of data if the functions of an operations computer 2 are to be transferred to another operations computer. In this case, data is written to the fixed disk drives 5 and read by the relevant operations computers 2. The network 10 is arranged by the development computers 20 to direct user access to whichever of the operations computers 2 is required.

The information sources 15 and 16 are connected directly to the relevant operations computer because the network 10 is arranged to handle user access codes, which codes would not be used by information sources.

In this case, one of the operations computers 2 is arranged to carry out processing functions for a portfolio management investment system and is connected to a leased line 14 for a remote information source 16 and to a switched line for a remote information source 15.

Generally, such functions involve real-time processing of transactions including deals, bargains, money in and money out, transfers, rights, bonuses, currency switches and broker settlements. In addition, databases are updated with information on a daily basis regarding various bond and equity prices. Such prices are received both from stock brokers within the particular country and from foreign information sources. The portfolio management investment functions include the carrying out of unitised valuations, distribution processing, the handling of enquiries, the carrying out of commission analysis and management reporting, the carrying out of client/stock analysis reporting (including asset distribution) and broker settlements. The outputs from the system consequent to such functions include the printing of advice notes, of contracts, of client performance reports, of dividend vouchers and of schedules.

In order for such functions to be effective it is essential that the computer system 1 include stored databases which are updated regularly, at least once a day and preferably more often than this. In order to do this, one must use information not only from local stock markets but also from international stock markets throughout the world. This has heretofore been quite a difficult problem because of the time differentials of countries.

In this embodiment, the information sources 16 are within the country and the information sources 15 are abroad.

Information relating to the local stock market is transmitted late in the evening when the stock market has closed. This information is transmitted to an operations computer 2 during normal working hours.

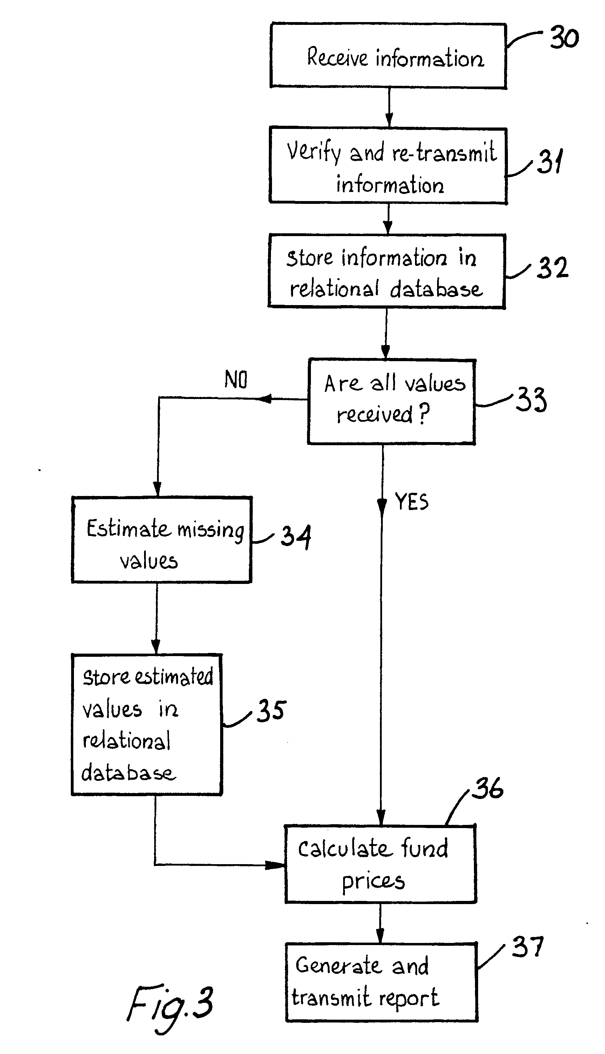

Information from many foreign countries becomes available only during night-time and the computer system 1 is arranged to receive such information according to the procedure of Fig. 3. Firstly, in step 30 the modems 18 are programmed to automatically answer and to receive a request for transmission. of information from the information source 15. The modem 18 is also arranged to carry out error detection comparisons in step 31 and to subsequently re-transmit the verified information to the relevant operations computer 2 in which it is temporarily stored in step 32 in memory namely, a relational database of the fixed disk drives 5. The relevant operations computer 2 then carries out a check in step 33 to see if all of the required information (in this case values of various financial parameters including stock and equity values) is received. If some of the information is missing, the operations computer 2 estimates the values by carrying out calculations based on previous values for that parameter and stored algorithms (step 34). For example, in the case where the value of a Government Stock is not available, the operations computer 2 estimates the present interest for Government Stock and takes into account the previous capital element of the stock. Using this information and other information including the coupon rate and the number of days since the last dividend, the operations computer 2 will determine the income element which in turn leads to estimation of the Government Stock value. In step 35 the estimated values are then stored in the relational database, together with the stored information which has been received. The operations computer 2 then carries out various calculations in step 36 to determine fund prices based on the stored values. Such fund prices include both bid and offer official and market rates for various funds which comprise a portfolio of stock and equity values.

Using pre-defined layouts, the operations computer 2 in step 37 generates a report of the calculated fund values and stores the report in the disk drive 5 and simultaneously transmits the report to the network 10 which transmits it for printing on the printers 26, 28 and 29 of the in-house user system 11 which have been arranged to receive the information. Further, the reports are transmitted via the leased lines 14 to the remote user systems 12 for storage, or printing, as desired.

The other operations computers meanwhile carry out word processing and batch processing functions for the portfolio management investment system and other applications functions for an investment bank.

It will be appreciated that the computer system 1 provides users with completely up-to-date information immediately on starting work in the morning. This information is provided not only to in-house users but also to remote users, for example, in regional branches of an investment bank. The functions are carried out automatically, without user intervention.

By storing the fund value reports in the disk drives 5 and in the back-up tape drive 6, there is little chance that the information will be lost or destroyed and is easily available for users to access during a working day. The computer system 1 is not dependent on receiving real-time values for all parameters before the various fund value reports are prepared and there is thus little chance of disruption in preparation of these reports. By using switched lines and automatically programmed modems, the information may be received at any time during day or night, thus facilitating reception of information from all countries of the world.

Because the operations computers 2 are connected to user systems via a network which is controlled by development computers, complete versatility is achieved by optimum selection of the uses for the operations computers 2 according to their processing and memory capacities and function requirements. As the operations computers 2 are connected to the disk drives and tape drives via a star network, faulty operation of any one computer will not prevent access to stored information and will not thus disrupt operation of the computer system 1.

What has been achieved by the arrangement of the computer system 1 are the advantages of full redundancy for avoidance of problems caused by faults without the expense of having standby computers. The computers which are not used for applications processing are used for word processing and batch reporting, all of which work is required for a portfolio management investment system and other systems of an investment bank. For example, batch processing may involve generation of a personalised letter to every client informing them of new products, or reporting on portfolio performance. By the arrangement of dial-up connections to information sources, and the manner in which the information is handled in the operations computers, personnel of an investment bank and their agents may carry out their work using up-to-date information, which information is crucial for making investment decisions and advising clients.

## Claims

1. A computer system (1) comprising an operations computer (2) arranged to perform portfolio management investment functions, the operations computer (2) being connected via a communications network (10) to user interface devices (11,12), characterised in that:,
the computer system (1) includes at least two operations computers (2);
the operations computers (2) are connected by a cluster controller (3) to a cluster of fixed disk drives (5) and back-up tape drives(6);
the system (1) further comprises at least one control and development computer (20) connected to the operations computers (2) via the communications network (10) for controlling access of enquiries and inputs for portfolio management investment functions from the user interface devices (11,12) to a selected operations computer (2), for programming and updating stored processing values for portfolio investment operations of the selected operations computer, and for directing use of the or each other operations computer (2) for word processing or batch processing functions;

the system (1) includes modulation and demodulation devices (18) operating on telecommunication lines (14) and connected directly to the selected operations computer (2) for reception of real-time information including current values of portfolio investment parameters, the modulation and demodulation devices (18) being arranged to receive said information automatically and to verify that the information is in a pre-defined format; and

the selected operations computer comprises:-

an input interface circuit for receiving (30,31)and storing (32) in random access memory said information;

a comparator circuit for verifying (33) if values for all of a pre-defined list of parameters have been received;

a processing circuit having means for estimating values (34) of parameters for which values have not been received based on a stored next previous value for that parameter and on current market indicators, and for storing (35) estimated values in random access memory, the processing circuit also comprising means for calculating (36) fund prices based on the parameter values stored in random access memory; and

an output interface circuit for generating (37) a report for said fund prices and for automatically transmitting said report to the user interface devices via the communications network.

2. A computer system (1) as claimed in claim 1 wherein said cluster controller comprises a star network (3).

3. A computer system (1) as claimed in claims 1 or 2, wherein the processing circuit comprises means for estimating (34) parameter values of Government Stocks based on a determination of the relevant coupon rate, number of days since the previous dividend issued and of the capital element.

*Fig.1*

Fig.2

EP 0 434 877 A1

Receive information — 30

Verify and re-transmit information — 31

Store information in relational database — 32

Are all values received? — 33

NO

YES

Estimate missing values — 34

Store estimated values in relational database — 35

Calculate fund prices — 36

Generate and transmit report — 37

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DATAMATION, vol. 22, no. 7, July 1976, pages 54-56, Barrington, US; J.D. FOSTER: "Distributive processing for banking" <br> * Page 54, left-hand column, line 1 - page 56, left-hand column, line 12 * | 1 | G 06 F 15/30 |
| A | EVOLUTIONS IN COMPUTER COMMUNICATIONS, PROCEEDINGS OF THE FOURTH INTERNATIONAL CONFERENCE ON COMPUTER COMMUNICATION, Kyoto, 26th-29th September 1978, pages 467-472, North-Holland Publishing Co., Amsterdam, NL; Y. YOSHINO et al.: "New data communication system for nationwide banking activities and development of its software" <br> * Page 467, section 2.0 - page 468, section 2.3, paragraph (B) * | 1 | |
| A | US-A-4 376 978 (MERRILL LYNCH PIERCE, FENNER & SMITH) <br> * Column 1, line 9 - column 9, line 66 * | 1 | |
| A | EP-A-0 278 132 (COLLEGE SAVINGS BANK) <br> * Page 2, line 4 - page 5, line 40, figures * | 1 | TECHNICAL FIELDS SEARCHED (Int. Cl.5) <br><br> G 06 F 15/30 <br> G 06 F 15/24 |
| D,A | EP-A-0 082 225 (IBM) | 1 | |

The present search report has been drawn up for all claims

| Place of search | Date of completion of the search | Examiner |
|---|---|---|
| THE HAGUE | 17-07-1990 | CHUGG D.J. |

EPO FORM 1503 03.82 (P0401)